# FASCICULE DE BREVET EUROPEEN

(11) **EP 2 074 631 B1**
(45) Date de publication et mention de la délivrance du brevet: **02.05.2012**
(21) Numéro de dépôt: 07821732.0
(22) Date de dépôt: 23.10.2007
(51) Int. Cl.: G21C 19/38, G21C 19/48

(54) **PROCEDE DE TRAITEMENT DE COMBUSTIBLES NUCLEAIRES COMPRENANT DU CARBURE DE SILICIUM ET DEGAINAGE DE PARTICULES DE COMBUSTIBLE NUCLEAIRE**
VERFAHREN ZUM VERARBEITEN VON SILIZIUMKARBID ENTHALTENDEN KERNBRENNSTOFFEN UND ZUM ENTMANTELN VON KERNBRENNSTOFFPARTIKELN
METHOD FOR PROCESSING NUCLEAR FUELS CONTAINING SILICON CARBIDE AND FOR UNSHEATHING NUCLEAR FUEL PARTICLES

(30) Priorité: 24.10.2006 FR 0654464; 01.02.2007 US 887700 P
(43) Date de publication de la demande: 01.07.2009
(73) Titulaire: Commissariat à l'Énergie Atomique et aux Énergies Alternatives, 75015 Paris (FR)
(72) Inventeur: BOURG, Stéphane, 07220 Saint Thome (FR); PERON, Frédéric, 84000 Avignon (FR)
(74) Mandataire: Ilgart, Jean-Christophe
(86) Numéro de dépôt international: PCT/EP2007/061369
(87) Numéro de publication internationale: WO 2008/049847

(56) Documents cités:
- DE-A1- 1 771 401
- DE-A1- 2 152 069
- DE-A1- 2 428 393

## Description

### Domaine technique

La présente invention se rapporte à un procédé de traitement de combustibles nucléaires comprenant du carbure de silicium (SiC) et éventuellement du carbone, en tant que matrice hétérogène.

La présente invention se rapporte en particulier à un procédé de dégainage de particules combustibles nucléaires TRISO ou BISO.

Les particules TRISO se présentent le plus couramment sous forme de billes, généralement de tailles millimétriques, constituées d'un coeur de matériau fissible et d'une gangue ou gaine externe permettant de confiner le matériau fissible. Le matériau fissible du coeur est généralement constitué d'oxydes d'actinides ou plus rarement de carbures ou d'oxy-carbures d'actinides. La gaine peut être mono- ou multicouche. Dans les combustibles nucléaires TRISO les plus utilisés, la gaine comprend du coeur vers l'extérieur : une couche de carbone poreux permettant l'expansion des gaz de fission ; une couche de carbone pyrolytique dense ; une couche de carbure de silicium ; et, à nouveau, une couche de carbone pyrolytique. Les particules BISO sont des particules TRISO sans la couche externe de carbone pyrolytique.

### Etat de la technique

Les combustibles TRISO ont été conçus dans les années 60. Le traitement de ce type de combustible par les techniques conventionnelles, par exemple par hydrométallurgie en milieu acide nitrique pour la dissolution du combustible, n'est pas pratique du point de vue industriel car il nécessite un broyage des particules conduisant à la formation de fines nucléairement contaminées et difficiles à gérer. De plus, des études menées dans les années 70 ont montré que le taux de récupération n'était pas quantitatif.

Dans un but analytique exclusivement, des techniques actuelles proposent d'utiliser des gaz pour tester l'intégrité de particules de type TRISO avant et/ou après irradiation. Suivant ces techniques, par exemple, pour tester l'intégrité d'une couche externe de carbone, on soumet les particules à tester à du chlore à 1500°C et on contrôle ensuite par radiographie l'état de la couche de SiC : la destruction de la couche de SiC indique que la couche de carbone est fissurée. Ces techniques permettent aussi d'analyser l'intégrité des couches internes de carbone. En effet, en cas de défaut, il y a formation de composés d'uranium chlorés volatils. Pour tester l'intégrité d'une couche de SiC, on peut contrôler l'état des couches internes de carbone par porosimétrie au mercure après passage à plus de 700°C sous oxygène. Ces techniques analytiques sont exposées par exemple dans les documents suivants : Hewette et al., «Detection of defective SiC layers in coated nuclear fuel particles», Nucl. Tech, vol. 21, p. 149, 1974 ; Lavalle D.E. et al., «The determination of defective particle fraction in high temperature gas cooled reactor fuels», Nucl. Tech., vol. 33, p. 290, 1976 ; Costanzo, D.A.., «Energy programs gas cooled reactor programs», ORNL-5100, p. 33-41, 1976 ; et US 4,227,081, Caputo A.J. et al., «Method of evaluating the integrity of the outer carbon layer of triso-coated reactor fuel particles».

Aucun procédé de traitement adéquat aux combustibles TRISO irradiés et permettant de résoudre les inconvénients précités n'a été développé à ce jour, probablement du fait que les particules TRISO n'ont pas suscité beaucoup d'intérêt au cours des années 1975-2000.

Or, actuellement, les combustibles TRISO présentent un intérêt renouvelé, notamment pour des projets de réacteurs nucléaires à haute température, et de nombreux travaux de recherche sont effectués dans le monde.

Il existe donc un réel besoin de mettre au point des procédés qui permettent de retraiter ces combustibles actuels et futurs. Ces procédés doivent être efficaces quant au taux de récupération, ils doivent être propres, économiques, rapides et pratiques du point de vue industriel.

### Description de l'invention

Les inventeurs de la présente invention fournissent précisément un tel procédé.

Le procédé de la présente invention est un procédé de traitement d'un combustible nucléaire comprenant un matériau fissible, contenu dans une gaine ou un enrobage de SiC et éventuellement de carbone, ledit procédé comprenant la mise en contact dudit combustible avec un mélange de chlore et d'oxygène à une température inférieure à 950°C, en particulier strictement inférieure à 950°C et, plus particulièrement, à une température comprise entre 400 et 900°C, de manière à éliminer le SiC, et le carbone s'il y en a, dudit combustible.

Grâce au procédé de l'invention, il est possible de volatiliser les couches de SiC, et de carbone s'il y en a, d'un combustible nucléaire par réaction chimique avec le mélange de chlore et d'oxygène.

Par «matériau fissible», on entend, dans le cadre de la présente invention, tout matériau radioactif utilisable pour créer de l'énergie au service de l'homme.

Par «combustible nucléaire comprenant un matériau fissible, du SiC et éventuellement du carbone», on entend, dans le cadre de la présente invention, un combustible nucléaire comprenant un matériau fissible et du SiC, ou un tel combustible comprenant en outre du carbone.

Par « matrice hétérogène », on entend, dans le cadre de la présente invention, le fait que, dans le combustible nucléaire mis en oeuvre, le SiC et éventuellement le carbone se présentent sous forme de couches distinctes du matériau fissible telles qu'une gangue, une gaine ou un enrobage.

Le procédé de la présente invention est particulièrement adapté au traitement des combustibles nucléaires qui se présentent sous forme de particules, plus particulièrement sous forme de particules comprenant du SiC et éventuellement du carbone et, plus particulièrement encore, des combustibles nucléaires TRISO ou BISO. Il peut s'agir de particules comprenant un coeur de matériau fissible et une gaine (mono- ou multicouche) comprenant une alternance de couches de carbone et de SiC, par exemple comme décrit ci-dessus. Le traitement par le procédé de l'invention est alors, en fait, un traitement de dégainage desdites particules.

Dans le cadre de la présente invention, un combustible à matrice SiC hétérogène est un combustible nucléaire dans lequel le SiC et éventuellement le carbone se présentent sous forme de couches (la matrice) distinctes du matériau fissible. Lorsque le combustible nucléaire mis en oeuvre dans le cadre de la présente invention est un tel combustible à matrice SiC hétérogène, le traitement par le procédé de l'invention est un traitement d'élimination de ladite matrice i.e. un traitement d'élimination desdites couches.

Actuellement, le coeur des combustibles TRISO ou BISO est souvent constitué d'oxydes d'actinides et plus rarement de carbures d'actinides ou d'oxy-carbures d'actinides. La présente invention s'applique non seulement à ces combustibles, mais également à tous les combustibles, quelle que soit la nature de leur coeur ou de leur gangue, dès lors que leur gangue comprend du SiC et éventuellement du carbone.

En outre, le procédé de l'invention peut être utilisé non seulement dans les traitements précités, mais aussi, par exemple, pour extraire un matériau fissible en le débarrassant de SiC et de carbone non désiré(s).

L'élimination du carbone se fait par combustion grâce à l'oxygène. Cette réaction chimique intervient dès 400°C, comme le montrent des analyses thermogravimétriques effectuées par les inventeurs de la présente. Pour cette élimination, l'oxygène pur est avantageusement utilisé.

L'élimination du SiC se fait en une étape par réaction chimique avec le mélange de chlore et d'oxygène. En effet, les inventeurs de la présente invention ont remarqué de manière surprenante qu'à une température supérieure à 700°C, de préférence supérieure à 800°C et de préférence encore supérieure à 900°C, un mélange de chlore et d'oxygène permet d'attaquer le SiC et de le transformer entièrement en SiCl₄ et COₓ sans résidus carbonés solides, ni silice.

Il est préférable de mettre en oeuvre le procédé de l'invention avec un mélange riche en chlore (excès stoechiométrique), afin d'éviter la formation de silice. Dans ce cas, il peut s'agir par exemple d'un mélange comprenant de 1 à 30 %, avantageusement de 5 à 25 %, particulièrement de 10 à 25 %, et, plus particulièrement, de 15 à 20 % en volume d'oxygène et 70 à 99 %, avantageusement de 75 à 95 %, particulièrement de 75 à 90 %, et, plus particulièrement, de 80 à 85 % en volume de chlore.

La température de traitement ne devrait pas dépasser 950°C et, de façon encore plus avantageuse, elle devrait être inférieure à et, en particulier, strictement inférieure à 950°C, afin d'éviter la formation éventuelle de chlorures d'actinides volatils.

Il est clair pour l'homme du métier que, au sein de la gamme particulière de température fournie à savoir la gamme allant de 400°C à 900°C, les bornes de cette gamme sont incluses dans la présente invention tout comme toutes les valeurs de température dans cette gamme. Plus particulièrement, la température du procédé de l'invention peut être 400°C, 450°C, 500°C, 550°C, 600°C, 650°C, 700°C, 750°C, 800°C, 850°C ou 900°C.

Avantageusement, selon l'invention, la quantité relative de chlore et d'oxygène dans le mélange gazeux peut être modifiée en fonction de la teneur en SiC et en carbone du combustible à traiter. Cela permet d'optimiser le traitement et de l'adapter à différents types de combustibles à traiter et au cours du traitement lui-même.

Par exemple, selon l'invention, lorsque la quantité de SiC à éliminer varie au cours du traitement, le mélange de chlore et d'oxygène peut être modifié pour suivre cette variation.

Ainsi, selon l'invention, lorsque le combustible comprend du SiC et du carbone, et qu'à un moment M du traitement un des deux cas suivants se présente (a) il y a plus de SiC que de carbone à éliminer, ou (b) il y a plus de carbone que de SiC à éliminer ; alors, audit moment M, le mélange de chlore et d'oxygène peut être modifié de façon à ce qu'il y ait pour le cas (a) plus de chlore que d'oxygène ou pour le cas (b) plus d'oxygène que de chlore, voire même de l'oxygène pur s'il ne reste que du carbone à éliminer.

De façon comparable, le traitement mis en oeuvre et, notamment les quantités d'oxygène et de chlore utilisées et la température de la réaction dépendront de la nature des combustibles à traiter et, plus particulièrement, de la composition de la gaine (de la gangue ou de l'enrobage) desdits combustibles. Pour traiter un combustible nucléaire dont la gaine présente des couches externes riches en carbone, la proportion initiale d'oxygène pourra se situer dans les valeurs élevées des gammes proposées ci-dessus, voire même à des valeurs supérieures et la température de réaction pourra être choisie dans les valeurs basses des gammes proposées ci-dessus.

Ceci est particulièrement avantageux pour traiter des particules de combustible TRISO ou BISO comportant des couches de SiC et de carbone. Ainsi, pour les particules TRISO données en exemple ci-dessus, il est possible d'éliminer la couche externe de carbone par un traitement préalable sous oxygène pur à 400°C avant d'utiliser un mélange chlore-oxygène riche en chlore, à des températures supérieures telles que 700°C, 800°C et de préférence 900°C. A la fin du traitement, il est possible d'augmenter la teneur en oxygène.

Comme indiqué ci-dessus, l'élimination de SiC, et de carbone s'il y en a, génère une émission de gaz. On peut avantageusement analyser la composition chimique de ladite émission puis modifier la composition du mélange de chlore et d'oxygène en fonction de cette analyse. Cette analyse peut être effectuée par exemple par dosage des teneurs en SiCl₄ et COₓ émises au cours du traitement. Cette analyse peut être effectuée par exemple au moyen de la spectrométrie infrarouge ou la spectrométrie de masse. La présence de SiCl₄ dans les gaz informe de l'élimination de SiC, ce qui impose le maintien d'une quantité relative de chlore élevée dans le mélange. Une teneur en COₓ supérieure à la teneur en SiCl₄ (en mole) informe d'un surplus de carbone, ce qui commande une augmentation avantageuse de la quantité relative d'oxygène dans le mélange.

L'analyse et la modification du mélange peuvent être automatisées au moyen de débitmètres massiques contrôlant les flux de chlore et d'oxygène, commandés par les teneurs en SiCl₄ et COₓ dans les gaz de combustion.

La mise en contact entre le mélange de chlore et d'oxygène et le SiC et éventuellement le carbone est bien entendu, de préférence, mise en oeuvre de manière à favoriser les réactions chimiques entre ce mélange et le SiC, et le carbone s'il est présent, du combustible à traiter.

Cette mise en contact peut être effectuée, par exemple, dans un réacteur comprenant des moyens de chauffage et des moyens d'introduction du mélange de chlore et d'oxygène. De préférence, ce réacteur comprend également des moyens de brassage du matériau combustible à traiter afin de faciliter et d'optimiser sa mise en contact avec le mélange de chlore et d'oxygène, et donc son traitement. De préférence, ce réacteur comprend également des moyens de récupération, et éventuellement d'analyse, des gaz issus de l'élimination du SiC et du carbone s'il y en a. Ces moyens d'analyse et leur fonction sont exposés ci-dessus.

En résumé, le procédé de l'invention permet notamment un dégainage chimique de particules combustibles nucléaires de type BISO ou TRISO ou à matrice SiC. Il s'agit d'une attaque chimique en phase gaz permettant de volatiliser, par exemple entre 400 et 900°C, les couches de carbone (pyrolytiques et gaine intermédiaire (« buffer »)) et de SiC enrobant le coeur de matériau fissible.

Le procédé de la présente invention est propre, car seules des émanations gazeuses sans fines nucléairement contaminées sont à gérer (« dégainage chimique »).

Le procédé de la présente invention ne fait intervenir que des réactions chimiques simples et aucun des réactifs n'est sensible aux rayonnements. Il peut donc s'appliquer à des combustibles à faible temps de refroidissement.

Pour toutes ces raisons, et comme le montrent les exemples ci-dessous, le procédé de la présente invention est rapide et pratique du point de vue industriel.

D'autres avantages pourront encore apparaître à l'homme du métier à la lecture des exemples ci-dessous, illustrés par les figures annexées, donnés à titre illustratif.

### Brève description des figures

- La figure 1 représente un graphique tridimensionnel réalisé à partir d'une approche thermodynamique de l'action d'un mélange de chlore et d'oxygène sur le SiC.
- Les figures 2a et 2b représentent deux graphiques montrant l'effet de la température (« T » exprimé en °C) sur la vitesse de volatilisation de SiC, exprimée en perte de masse (« E » exprimé en % en poids), sous l'action d'un mélange de chlore et d'oxygène.
- La figure 3 représente un graphique de comparaison des effets sur SiC, exprimés en perte de masse (« E » exprimé en % en poids) en fonction du temps (« t » en heures), du chlore et de l'oxygène.
- La figure 4 représente un graphique montrant l'effet, en perte de masse (« E » exprimé en % en poids) en fonction de la température (« T » exprimé en °C) sur la vitesse de volatilisation de SiC sous l'action d'un mélange de chlore et d'oxygène.

### EXEMPLES

### Exemple 1 : Approche thermodynamique de l'action de mélanges de chlore et d'oxygène sur du SiC

Des calculs thermodynamiques réalisés avec le logiciel HSC (Outokumpu) sur la composition à l'équilibre d'un système en réacteur clos, démontrent qu'il est possible de volatiliser le SiC en une seule étape en utilisant un mélange chlore-oxygène riche en chlore.

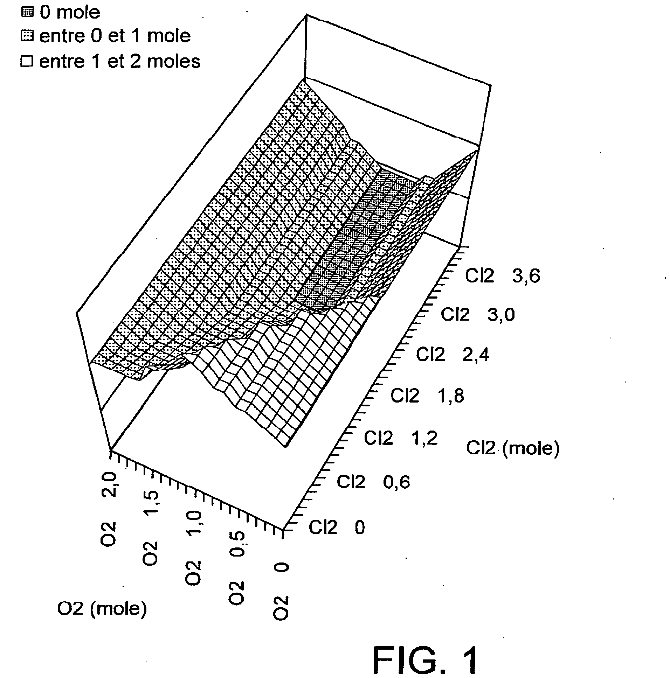

La figure 1 annexée décrit la zone de composition du mélange gazeux pour laquelle il n'y a théoriquement aucun résidu solide (zone la plus foncée).

### Exemple 2 : Combustion du carbone

La combustion du carbone est effective dès 400°C. Cela a été vérifié expérimentalement par analyse thermogravimétrique. Pour cette expérience, l'oxygène pur a été utilisé.

La volatilisation du SiC a été vérifiée sur poudre, sur particules et sur échantillons massifs.

### Exemple 3 : Comportement du SiC en poudre sous mélange chlore + oxygène

Une étude en fonction de la température a montré qu'une température de 900°C permettait d'attaquer quantitativement le SiC.

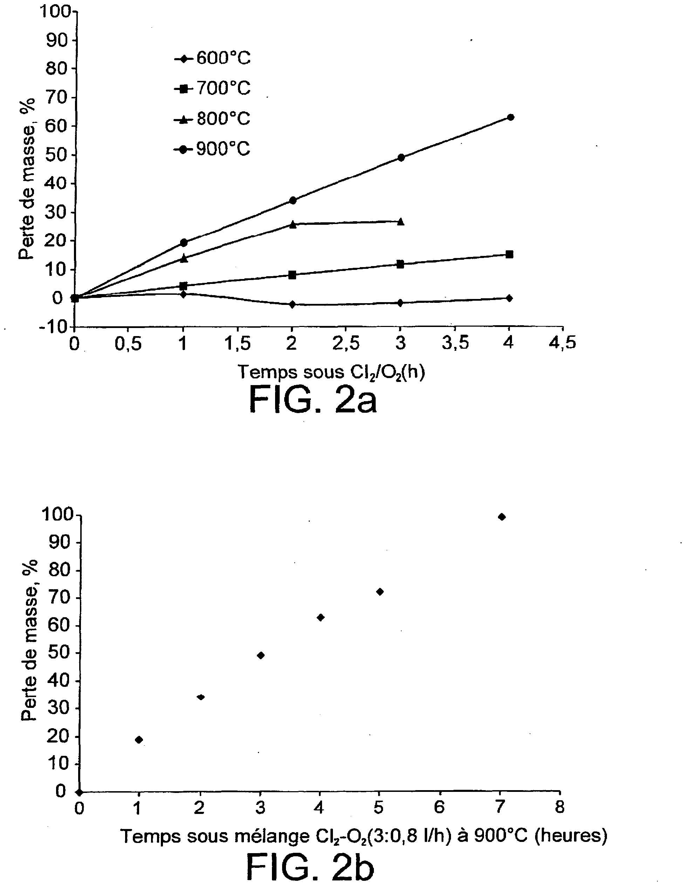

Les résultats de cette étude sont reportés sur la Figure 2 annexée.

Pour obtenir les résultats de la figure 2a, on a utilisé un mélange constitué de 80 % en volume de Cl₂ et de 20 % en volume d'oxygène.

Pour obtenir les résultats de la figure 2b, on a utilisé un mélange constitué de 80 % en volume de Cl₂ et de 20 % en volume d'oxygène. La réaction a été réalisée à 900°C.

### Exemple 4 : Traitement des particules BISO selon l'invention

Les particules BISO traitées dans cet exemple sont des particules TRISO sans la couche externe de carbone. Le matériau du coeur est constitué de ZrO₂ simulant UO₂. La gaine comprend du coeur vers l'extérieur : une couche de carbone poreux, une couche de carbone pyrolytique dense et une couche de SiC.

Sur particules, les effets du chlore seul, du chlore en alternance avec l'oxygène et du mélange chlore-oxygène ont été comparés.

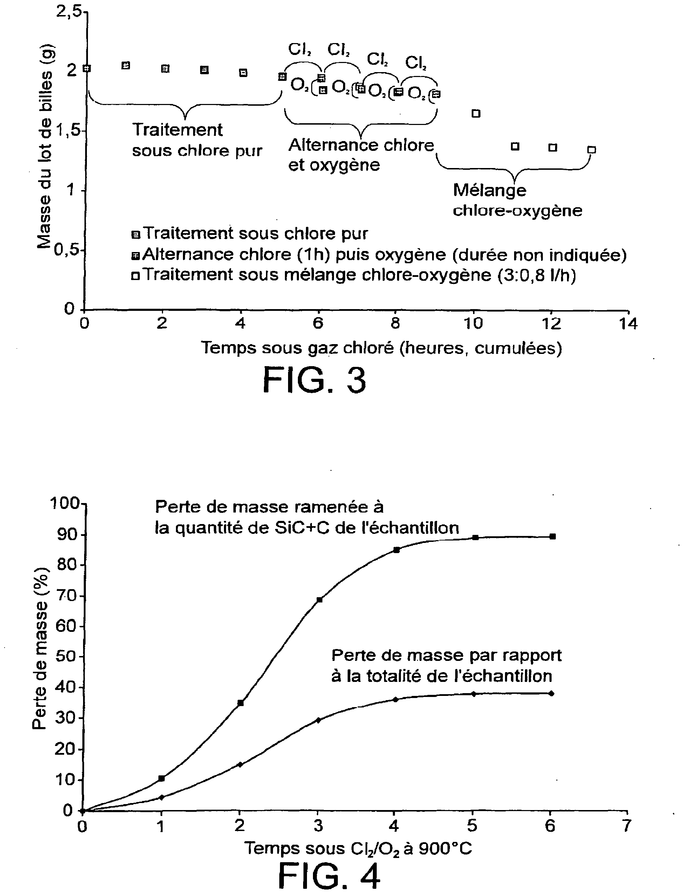

Les résultats représentés sur le graphique de la figure 3 annexée montrent qu'à 900°C, seul le mélange chlore + oxygène est efficace pour volatiliser le SiC.

Sur la figure 4, on représente les mesures de perte de masse (en % en poids) ramenées à la quantité de Si + C de l'échantillon de combustible BISO traité (courbe trait continu), et les mesures de perte de masse (en % en poids) ramenées à la totalité de l'échantillon de combustible BISO traité (trait discontinu). Ces mesures ont été effectuées à une température de 900°C avec un mélange constitué de 80% en volume de Cl₂ et de 20% en volume d'oxygène.

## Revendications

1. Procédé de traitement d'un combustible nucléaire comprenant un matériau fissible, du SiC et éventuellement du carbone, ledit procédé comprenant la mise en contact dudit combustible avec un mélange de chlore et d'oxygène à une température inférieure à 950°C et, plus particulièrement, à une température comprise entre 400 et 900°C, de manière à éliminer le SiC, et le carbone s'il y en a, dudit combustible.

2. Procédé selon la revendication 1, dans lequel le mélange de chlore et d'oxygène est un mélange comprenant, en volume, de 1 à 30 % d'oxygène et de 70 à 99 % de chlore.

3. Procédé selon la revendication 1, dans lequel la quantité de SiC à éliminer variant au cours du traitement, le mélange de chlore et d'oxygène est modifié pour suivre cette variation.

4. Procédé selon la revendication 1, dans lequel le combustible comprend du SiC et du carbone dans lequel à un moment M du traitement un des deux cas suivants se présente : (a) il y a plus de Sic que de carbone à éliminer, ou (b) il y a plus de carbone que de SiC à éliminer ; et dans lequel, audit moment M, le mélange de chlore et d'oxygène est exprès modifié de façon à ce qu'il y ait pour le cas (a) plus de chlore que d'oxygène ou pour le cas (b) plus d'oxygène que de chlore.

5. Procédé selon la revendication 1, dans lequel l'élimination de SiC, et du carbone s'il y en a, générant une émission de gaz, on détermine la composition chimique de ladite émission puis on modifie la composition du mélange de chlore et d'oxygène en fonction de cette détermination.

6. Procédé de traitement selon l'une quelconque des revendications précédentes, dans lequel le combustible nucléaire est un combustible TRISO ou BISO.

7. Procédé de traitement selon la revendication 6, dans lequel le combustible nucléaire est constitué de particules TRISO ou BISO comprenant du SIC et du carbone.

8. Procédé selon la revendication 7, dans lequel les particules comprennent un coeur de matériau fissible et une gaine comprenant une alternance de couches de carbone et de SiC, le traitement étant un traitement de dégainage des particules.

9. Procédé selon l'une quelconque des revendications précédentes, dans lequel le matériau fissible est choisi dans le groupe constitué des oxydes d'actinides, des carbures d'actinides et des oxy-carbures d'actinides.

10. Procédé de traitement selon l'une quelconque des revendications 1 à 6, dans lequel le combustible nucléaire est un combustible à matrice SiC hétérogène, le traitement étant un traitement d'élimination de ladite matrice.

## Claims

1. A method for processing a nuclear fuel comprising a fissile material, SiC and possibly carbon, said method comprising the contacting of said fuel with a chlorine/oxygen mixture at a temperature below 950°C, and, more particularly, at a temperature between 400 and 900°C, so as to eliminate the SiC and the carbon, if this is present, from said fuel.

2. Method according to claim 1, in which the chlorine/oxygen mixture is a mixture comprising 1 to 30% oxygen by volume and 70 to 99% chlorine by volume.

3. Method according to claim 1, in which, when the amount of SiC to be removed varies during the processing, the chlorine/oxygen mixture is modified so as to follow this variation.

4. Method according to claim 1, in which the fuel comprises SiC and carbon, in which, at a moment M during the processing, one of the following two cases arises: (a) there is more SiC than carbon to be removed, or (b) there is more carbon than SiC to be removed; and in which, at said moment M, the chlorine/oxygen mixture is specifically modified so that there is more chlorine than oxygen in case (a) or more oxygen than chlorine in case (b).

5. Method according to claim 1, in which the removal of the SiC and of the carbon, if this is present, generates gas emission, the chemical
composition of said emission is determined and then the composition of the chlorine/oxygen mixture is modified according to this determination.

6. Processing method according to any one of preceding claims, in which the nuclear fuel is a TRISO or BISO fuel.

7. Processing method according to claim 6, in which the nuclear fuel consists of TRISO or BISO particles comprising SiC and carbon.

8. Method according to claim 7, in which the particles comprise a kernel of fissile material and a cladding comprising an alternation of carbon and SiC layers, the processing being a treatment to declad the particles.

9. Method according to any one of preceding claims, in which the fissile material is chosen from the group consisting of oxides of actinides, carbides of actinides and oxycarbides of actinides.

10. Processing method according to any one of preceding claims 1 to 6, in which the nuclear fuel is a fuel having a heterogeneous SiC matrix, the processing being a treatment to remove said matrix.

## Patentansprüche

1. Verfahren zur Aufarbeitung eines Kernbrennstoffs, der ein spaltbares Material, SiC und gegebenenfalls Kohlenstoff umfasst, wobei das Verfahren das In-Kontakt-Bringen des Brennstoffs mit einem Gemisch aus Chlor und Sauerstoff bei einer Temperatur unter 950 °C und insbesondere bei einer Temperatur zwischen 400 und 900 °C umfasst, zum das SiC und den gegebenenfalls vorhandenen Kohlenstoff aus diesem Brennstoff zu entfernen.

2. Verfahren gemäß Anspruch 1, wobei das Gemisch aus Chlor und Sauerstoff ein Gemisch ist, das 1 bis 30 Vo).-% Sauerstoff und 70 bis 99 Vol.-% Chlor umfasst.

3. Verfahren gemäß Anspruch 1, wobei die Menge des zu entfernenden SiC während der Aufarbeitung schwankt und das Gemisch aus Chlor und Sauerstoff so verändert wird, dass es dieser Schwankung folgt.

4. Verfahren gemäß Anspruch 1, wobei der Brennstoff SiC und Kohlenstoff umfasst und wobei zu einem Zeitpunkt M der Aufarbeitung einer der beiden folgenden Fälle auftritt: (a) es ist mehr SiC als Kohlenstoff zu entfernen oder (b) es ist mehr Kohlenstoff als SiC zu entfernen und wobei zu diesem Zeitpunkt M das Gemisch aus Chlor und Sauerstoff absichtlich so verändert wird, dass es im Fall (a) mehr Chlor als Sauerstoff oder im Fall (b) mehr Sauerstoff als Chlor aufweist.

5. Verfahren gemäß Anspruch 1, wobei das Entfernen des SiC und des gegebenenfalls vorhandenen Kohlenstoffs einen Gasaustrag erzeugt, die chemische Zusammensetzung dieses Austrags bestimmt wird und anschließend die Zusammensetzung des Gemisches aus Chlor und Sauerstoff gemäß dieser Bestimmung verändert wird.

6. Aufarbeitungsverfahren gemäß einem der vorangehenden Ansprüche, wobei der Kernbrennstoff ein TRISO- oder BISO-Brennstoff ist.

7. Aufarbeitungsverfahren gemäß Anspruch 6, wobei sich der Kernbrennstoff aus SiC und Kohlenstoff umfassenden TRISO- oder BISO-Teilchen zusammensetzt.

8. Verfahren gemäß Anspruch 7, wobei die Teilchen einen Kern aus spaltbarem Material und eine sich abwechselnde Schichten aus Kohlenstoff und SiC umfassende Hülle umfassen und die Aufarbeitung eine Behandlung zur Entmantelung der Teilchen ist.

9. Verfahren gemäß einem der vorangehenden Ansprüche, wobei das spaltbare Material aus der Gruppe ausgewählt ist, die sich aus Actinidenoxiden, Actinidencarbiden und Actinidenoxycarbiden zusammensetzt.

10. Aufarbeitungsverfahren gemäß einem der Ansprüche 1 bis 6, wobei der Kernbrennstoff ein Brennstoff mit einer heterogenen SiC-Matrix ist und die Aufarbeitung eine Behandlung zum Entfernen dieser Matrix ist.
